(19) Europäisches Patentamt / European Patent Office / Office européen des brevets

(11) **EP 3 000 182 B1**

(12) **EUROPEAN PATENT SPECIFICATION**

(45) Date of publication and mention
of the grant of the patent:
**12.07.2023 Bulletin 2023/28**

(21) Application number: **14801644.7**

(22) Date of filing: **22.05.2014**

(51) International Patent Classification (IPC):
*H04B 1/16* (2006.01)    *H04H 40/72* (2008.01)
*H04H 40/81* (2008.01)

(52) Cooperative Patent Classification (CPC):
**H04H 40/72;** H04H 40/81

(86) International application number:
**PCT/US2014/039206**

(87) International publication number:
**WO 2014/190187 (27.11.2014 Gazette 2014/48)**

(54) **METHOD AND CIRCUIT FOR SIGNAL QUALITY ESTIMATION AND CONTROL**

VERFAHREN UND SCHALTUNG ZUR SIGNALQUALITÄTSBESTIMMUNG UND -STEUERUNG

PROCÉDÉ ET CIRCUIT POUR ESTIMATION ET COMMANDE DE QUALITÉ DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.05.2013 US 201313899868**

(43) Date of publication of application:
**30.03.2016 Bulletin 2016/13**

(73) Proprietor: **Texas Instruments Incorporated
Dallas, TX 75265-5474 (US)**

(72) Inventors:
• **GUPTA, Pankaj
Rajasthan
Distt.Dausa 303505 (IN)**
• **MURALI, Sriram
Mathikere
Bangalore 560054 (IN)**
• **BALAKRISHNAN, Jaiganesh
Garudacharpalya
Bangalore 560048 (IN)**
• **VISHWAKARMA, Sanjay
Kanpur 208017 (IN)**

(74) Representative: **Zeller, Andreas et al
Texas Instruments Deutschland GmbH
Haggertystraße 1
85356 Freising (DE)**

(56) References cited:
EP-A1- 1 289 155          EP-A2- 0 430 468
US-A- 5 027 402           US-A1- 2010 151 807
US-A1- 2011 194 699       US-A1- 2012 257 694
US-B2- 8 023 918

**Description**

This relates in general to signal processing, and in particular to a method and circuit for signal quality estimation and control.

BACKGROUND

By estimating quality of a received signal in radio communications, various system parameters may be enhanced. For example, in a frequency modulation (FM) radio receiver, the consistency of perceptive audio quality is maintained across a wide variety of signal conditions by implementing stereo noise control (SNC) mechanisms, such as soft mute and mono-stereo blending. If a received signal to noise ratio (SNR) is reduced in a radio receiver, the noise in a demodulated audio signal becomes relatively more perceptible. Soft mute is a technique for attenuating a final audio output at low received SNRs to mitigate the noise audibility. Similarly, when the received SNR degrades, the audio output gradually switches from stereo to mono mode. In FM, optimal audio fidelity is maintained by dynamically scaling a stereo (L-R) signal by blending the stereo (L-R) signal with a mono (L+R) signal. Signal quality estimation is an important tool for enabling the SNC mechanisms, because the soft mute attenuation factor or the mono-stereo blending factor is controllable based on the signal condition.

US 2011/194699 A1 discloses a method of signal quality estimation and control, the method comprising: generating a demodulated signal associated with a radio signal; accessing information associated with quality of the demodulated signal; and estimating a value of radio frequency signal-to-noise ratio for the radio signal based on the information, wherein estimating the value of RFSNR facilitates in signal quality estimation of the radio signal and in control of the demodulated signal. US 2010/151807 A1 discloses a control method for an FM receiver that measures amplitude variations around 19 kHz after removing the pilot, as an estimation for the quality of the FM stereo signal and that is used for mono/stereo blending or muting. US 5 027 402 A discloses blend control in an FM stereo receiver, based on the amount of noise in the frequency band around the pilot tone. US 2012/257694 A1 discloses control in an FM receiver where noise measured in the signal free area around the pilot is used as a metric that is sufficiently related to the RF SNR for conditional mode-determination. SUMMARY

The object of the invention is to provide a method according to claim 1.

Additionally, a circuit includes a frequency shifter circuit, a filter circuit, and an RFSNR estimation circuit, according to claim 7. The frequency shifter circuit is configured to convert a demodulated signal associated with a radio signal, so that a signal-free region of the demodulated signal is around direct current (DC). The converted signal includes a signal component and a noise component. The filter circuit is coupled to the frequency shifter circuit and is configured to reject the signal component and retain the noise component. The RFSNR estimation circuit is coupled to the filter circuit and is configured to estimate a value of an RFSNR of the radio signal based on the noise component.

Moreover, in described examples, a radio receiver includes a demodulator circuit, a signal quality estimation circuit, and a control circuit. The demodulator circuit is configured to generate a demodulated signal associated with a radio signal. The signal quality estimation circuit is coupled to the demodulator circuit and is configured to: access information associated with a quality of the demodulated signal, and estimate a value of radio frequency signal-to-noise ratio (RFSNR) for the radio signal based on the information. The control circuit is coupled to the signal quality estimation circuit and is configured to control the demodulated signal based on the estimated value of the RFSNR.

BRIEF DESCRIPTION OF THE DRAWINGS

FIG. 1 is a graph of an example FM multiplexed signal associated with an FM broadcast.
FIGS. 2A and 2B are example plots of variation between RFSNR and audio SNR for SNC.
FIG. 3 is a block diagram of an example circuit of a radio receiver for performing SNC.
FIGS. 4A and 4B are plots of variation pertaining to an example received signal strength indicator (RSSI)-based signal quality estimation in a radio receiver.
FIG. 5 is a block diagram of a radio receiver, according to an embodiment.
FIG. 6 is a block diagram of a signal quality estimation circuit, according to an embodiment.
FIGS. 7A, 7B and 7C are graphs of an example performance of the signal quality estimation circuit of FIG. 6.
FIG. 8 is a flowchart of a method of signal quality estimation and control in a radio receiver, according to an embodiment.

## DETAILED DESCRIPTION OF EXAMPLE EMBODIMENTS

In one example of a radio communication system, information is transmitted on broadcast channels through radio signals. For example, information on broadcast channels in an FM band include a frequency modulated version of a multiplexed (MPX) format baseband signal ("MPX signal"). In this example, the MPX signal is generated by combining multiple signals into one composite signal, so that the original signals are reconstituted by an FM receiver. The MPX signal includes left (L) channel information and right (R) channel information that are used by the FM receiver to produce audio outputs. In one example, the MPX signal format includes L+R (left-plus-right) information, L-R (left-minus-right) information and a 19 kilohertz (KHz) pilot carrier signal.

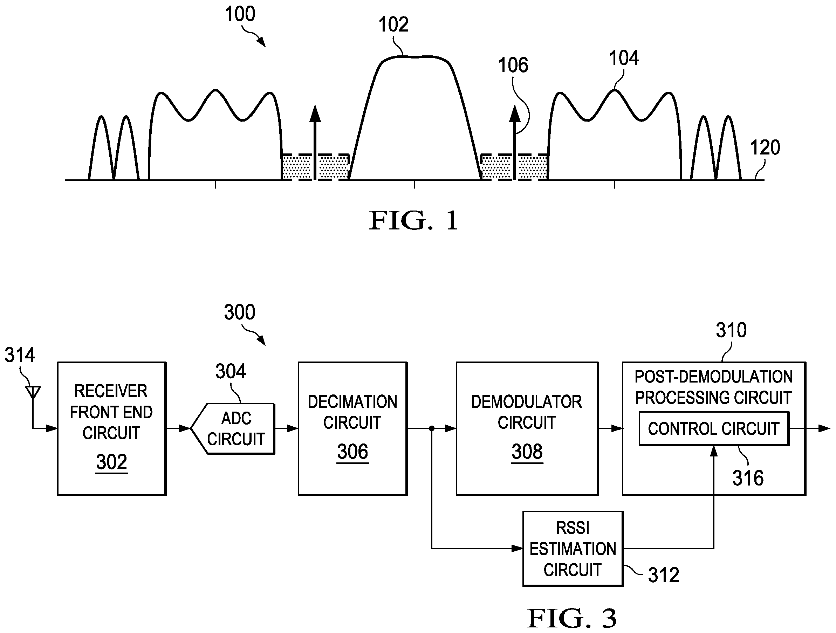

Referring to FIG. 1, an MPX signal 100 is illustrated along a frequency axis represented by numeral 120. The MPX signal 100 includes a sum signal (L+R) 102 and an amplitude modulated difference signal (L-R) 104 with a suppressed carrier. The sum signal (L+R) 102 contains the information of the left plus (+) right audio signal, and the difference signal (L-R) 104 contains the information of the left minus (-) right audio signal. To allow a demodulation of the amplitude modulated difference signal, a pilot carrier signal 106 is added to the MPX signal 100. The L+R information lies in a band between 15 Hz and 15 kHz, the L-R information lies around 38 kHz, spanning the frequency band from 23 KHz to 53 KHz, and the pilot carrier signal 106 lies at 19 kHz.

A stereo decoder is configured to convert a demodulated stereo MPX signal back into left (L) and right (R) audio signals. For example, many FM receivers are configured to produce a full stereo output by generating a left (L) channel audio output signal by adding the L+R and L-R signals, and a right (R) channel audio output signal by subtracting the L+R and L-R signals. If a mono output is selected, the FM receiver allows passing the full (L+R) signal to both the left (L) channel and the right (R) channel. In addition, varying degrees of mono stereo blending are applied to maintain optimum audio fidelity.

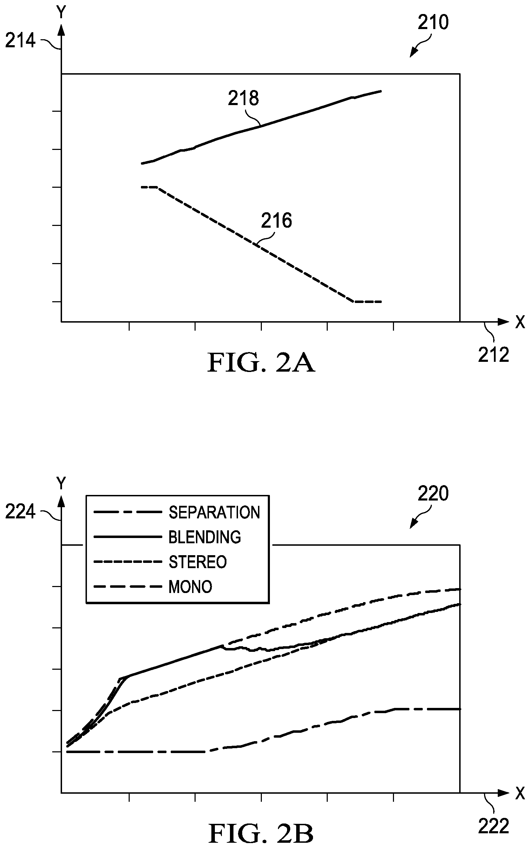

In one example, a radio broadcast band receiver such as an FM broadcast band receiver suffers from noise due to strong nearby blockers and/or other sources or conditions. In order to mitigate the noise problem, the FM receivers implement stereo noise control (SNC) to thereby improve audio perception during reception. The SNC mechanisms for improving audio perception include: soft mute; and mono-stereo blending. For example, when the signal to noise ratio (SNR) of the received signal reduces, the noise in the demodulated audio signal becomes relatively more perceptible. Soft mute is a technique for attenuating the final audio output at low received SNRs to mitigate the noise audibility. Accordingly, soft muting is useful for masking transients in an audio device. In one example, a transient is an abrupt change in the operation of a circuit or a spurious signal caused by such abrupt change. For example, the sound of transients may be experienced by wearing earphones before plugging the earphones into an operating radio, stereo, or cellular telephone. Other transients occur during the operation of audio electronic devices. If the received signal quality is good, then mono/stereo blending is performed to balance audio SNR with the stereo separation. The effects of soft-muting and mono/stereo blending for mitigating noise audibility are illustrated with reference to FIGS. 2A and 2B, respectively.

FIG. 2A shows a plot 210 representing example variations between RFSNR (plotted on x-axis 212) and audio SNR (plotted on y-axis 214) for soft-mute attenuation. A variation 216 shows an example of increased audio attenuation at lower RFSNR levels, in response to a signal quality metric shown by a variation 218 that is strongly correlated with the RFSNR. This helps in minimizing noise perceptibility at low RFSNR levels. Similarly, when the SNR of the received signal degrades, the audio output gradually switches from stereo to mono mode, as explained with reference to FIG. 2B. In FIG. 2B, a plot 220 represents example variation between RFSNR (plotted on x-axis 222) and audio SNR (plotted on y-axis 224) for mono/stereo blending. Mono/stereo blending is useful for balancing audio SNR with stereo separation when received signal quality is good. Optimal audio fidelity is maintained by dynamically scaling the stereo (L-R) signal, while blending with the mono (L+R) signal.

Various techniques are useful for mitigating the stereo noise by soft-muting and mono/stereo blending. One such technique determines a received signal strength indicator (RSSI) for predicting RFSNR of the signal received at the radio receiver, such as an FM receiver. The RSSI is a measure of the most recent signal's strength when it reached its destination. Higher values of RSSI indicate a stronger signal. In some examples, the determination of RSSI is useful for blending the audio output from stereo to mono when the RSSI indicates poor signal strength. The use of RSSI for mitigating noise signal in a radio receiver (for example, an FM receiver) is explained further in reference to FIG. 3.

FIG. 3 is a block diagram of an example circuit 300 of a radio receiver for performing SNC. The radio receiver is configured to determine the received signal quality based on a determination of RSSI associated with the received signal. The circuit 300 includes a receiver front end circuit 302, an analog-to-digital converter (ADC) circuit 304, a decimation circuit 306 representing decimation stages, a demodulator circuit 308, a post-demodulation processing circuit 310, and an RSSI estimation circuit 312. The receiver front-end circuit 302 is configured to convert a radio signal received from an antenna 314 into a baseband signal. The ADC circuit 304 is configured to convert the output signal of the receiver front end circuit 302 into a digital signal. The RSSI estimation circuit 312 is configured to indicate RSSI based on the output of the decimation circuit 306. The demodulator circuit 308 is configured to demodulate the output of the decimation circuit 306. The output of the demodulator circuit 308 includes a demodulated signal (for example, an FM multiplexed signal), which is provided to the post-demodulation processing circuit 310. The post-demodulation processing circuit 310 includes a control circuit 316 that is configured to process the demodulated signal (received from the demodulator circuit 308) based on the output of the RSSI circuit. In an FM receiver, the control circuit 316 is configured to process the demodulated signal (for example, an MPX signal) and to output, for example, L and R audio signals. An SNC circuit in an FM receiver is an example of the control circuit 316. RSSI is a primary control parameter (or metric) in the radio receiver of the circuit 300 for performing SNC.

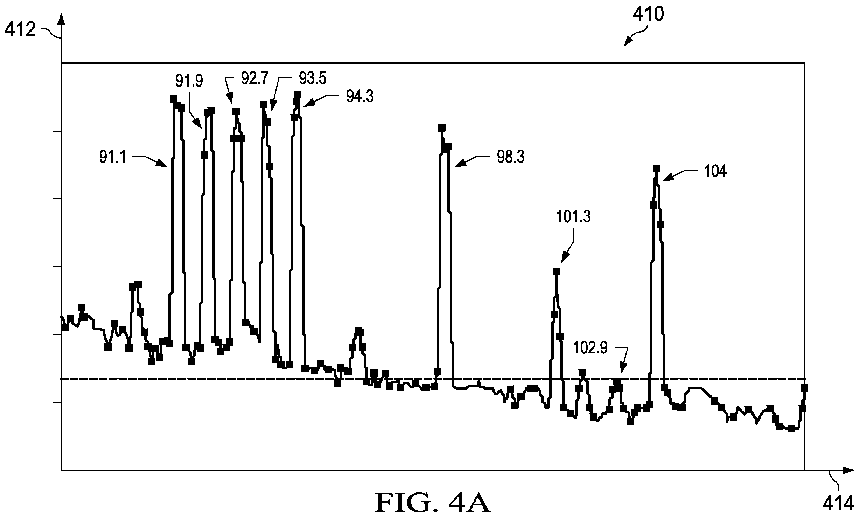

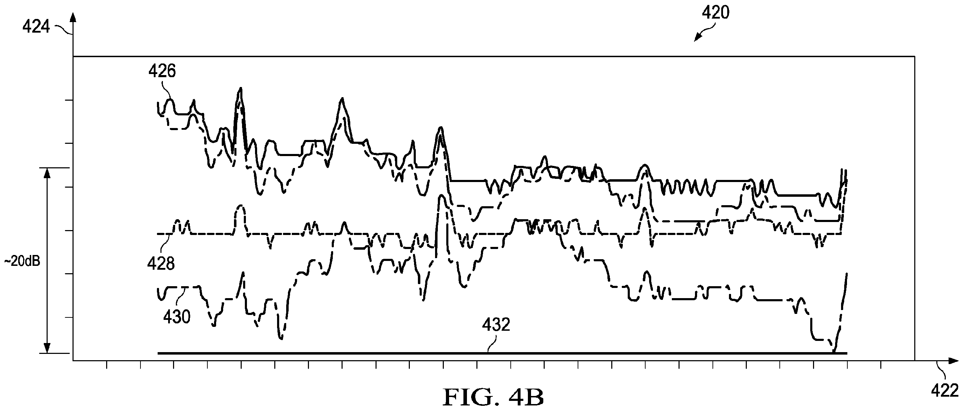

The RSSI metric reflects the signal quality of the signal received at the antenna 314 of the circuit 300. However, the RSSI metric reflects the true signal quality only when the noise power at the receiver is known precisely, including all factors such as antenna noise, receiver noise figure, thermal noise, etc. Under realistic field conditions with different types of antenna configurations/orientations, the noise at the input of the receiver front end circuit 302 varies significantly. For example, in portable FM receivers, a high degree of variability in the antenna impedance and/or gain occurs as a function of FM channel frequency, antenna orientation, and the like. This results in significant variability in the noise figure of the composite system (including the antenna). Various example plots indicating variation of noise profile and gain as a function of channel frequency, antenna orientation, antenna types, and the like are illustrated with reference to FIGS. 4A and 4B.

FIG. 4A shows a variation 410 of RSSI (along y-axis 412) with FM channel frequency (along x-axis 414). In this example plot, the measurement was performed near an open window using a headset antenna. In FIG. 4A, the noise profile and gain vary with respect to the FM channel frequency. FIG. 4B shows another example plot 420 of channel frequency (along x-axis 422) with RSSI (measured in an RF shielded area) (along y-axis 424). As shown by the plots 426, 428, 430, variation of in-band noise power with channel frequency occurs for different antenna orientations and antenna types. In FIG. 4B, large variations (over ~20 dB) exist in the measured noise, which are significantly higher than thermal noise level 432. Moreover, a significant variation in the values of RSSI metric with channel frequency occurs for different antenna types. Accordingly, RSSI is not a true indicator of signal quality.

Typically, mapping between RSSI and RFSNR is predicted under conditions where the noise figure of the radio receiver is stable and predictable. Accordingly, in such conditions, the RSSI is useful as a metric in the control circuit associated with the post-demodulation processing circuit (for example, the post-demodulation processing circuit 310). However, in portable radio receivers, a high degree of variability in the antenna impedance and/or gain occurs as a function of factors such as channel frequency, antenna orientation, and the like. This results in significant variability in the noise figure of the composite system (including the antenna). Accordingly, an RFSNR estimation based signal quality estimation and control mechanism is useful in radio receivers.

Various embodiments provide solutions for RFSNR estimation based signal quality estimation and control mechanism in radio receivers, such as radio receivers that overcome various performance obstacles, in addition to providing currently unavailable benefits. For example, various embodiments provide signal quality estimation based on determination of a correlation between the noise power in a demodulated signal and the quality of received signal. In an example embodiment, a circuit is configured to estimate a value of RFSNR and subsequently control the demodulated signal in a radio receiver to thereby improve the quality of the demodulated signal.

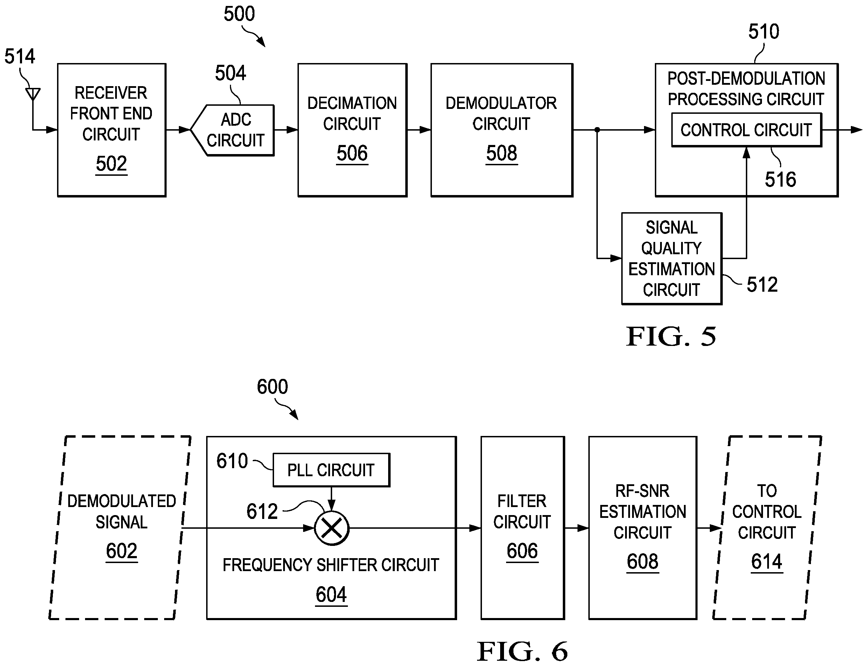

FIG. 5 is a block diagram of a radio receiver 500, according to an embodiment. An FM receiver is one example of the radio receiver 500. The radio receiver is configured to provide RFSNR estimation based signal quality estimation and control mechanism. The radio receiver 500 is configured to receive a radio signal, such as an FM signal. In FIG. 5, the radio receiver 500 includes a receiver front end circuit 502, an analog-to-digital converter (ADC) circuit 504, a decimation circuit 506 representing decimation stages, a demodulator circuit 508, a post-demodulation processing circuit 510, a signal quality estimation circuit 512, and an antenna 514. The receiver front end circuit 502, the ADC circuit 504, the decimation circuit 506, the demodulator circuit 508, and the post-demodulation processing circuit 510 have the same configuration and functionality as their similarly named components of the circuit 300 (FIG. 3).

The radio receiver 500 is shown to include the signal quality estimation circuit 512, which is configured to estimate the RFSNR values of the radio signal for estimating signal quality of the radio signal. In an embodiment, the RFSNR is determined based on the information associated with a quality of the demodulated signal that is being generated from the radio signal. In an embodiment, the signal quality estimation is used for performing optimal SNC in an FM radio receiver.

For example, the radio receiver 500 facilitates in dynamically estimating signal quality by exploiting the correlation between the noise power in the demodulated signal and the quality of received signal. Accordingly, if the radio receiver 500 is an FM receiver, it facilitates in dynamically estimating signal quality of the radio signal by exploiting a correlation between the noise power in an MPX signal and the SNR of the radio signal received at the input of the radio receiver 500. MPX signal refers to the FM demodulated signal that is output from the demodulator circuit 508 in an FM receiver. In an embodiment, the noise power in the demodulated signal is a function of RFSNR and the phase noise of local oscillator (LO) of the radio receiver 500. At intermediate RFSNR and below, the audio SNR is primarily limited by the front-end noise. This implies a high degree of correlation between the measured noise power and RFSNR when the phase noise contribution is negligible in comparison to front-end noise.

In an embodiment, the received signal in a radio receiver 500 is assumed to be corrupted by noise. The signal is frequency shifted to the base-band and processed to remove the out-of-band blockers and to filter the out-of-band noise component. The frequency shifted complex base-band signal is demodulated to obtain the demodulated signal. At good RFSNR, only the component of the noise that is tangential to the instantaneous complex FM phasor impacts the performance, while the radial component has no impact. The demodulated signal includes a desired signal component, phase noise contribution from the LO and a differentiated base band filtered additive white Gaussian noise (AWGN). If the contribution from LO phase noise is negligible in comparison to the front end noise, the additive noise component at the output of the demodulator circuit 508 is totally (or almost totally) determined by carrier amplitude and a quadrature component of base band noise. The noise level, after demodulation, is inversely proportional to the received signal amplitude. Accordingly, the noise power in demodulated signal is a direct indication of the signal conditions of the signal received at the radio receiver 500. In an embodiment, if the radio receiver 500 is an FM receiver, the average power in FM modulated signal is $A_c{}^2/2$, where $A_c$ is a FM carrier amplitude, and average noise power in transmitted bandwidth $B_T$ is $N_0 B_T$, where $No$ is noise power spectral density. So the RFSNR is represented by the following expression (1):

$$RFSNR = A_c{}^2/2N_0 B_T \qquad (1)$$

An MPX signal includes one or more signal-free regions. For example, as already described with reference to FIG. 1, the frequency band of the MPX signal between 15 kHz - 23 kHz does not contain any signal component other than the pilot. So the MPX signal at the FM receiver corresponding to the signal-free region (for example, the region associated with 15 kHz - 23 kHz) contains only noise component and a signal component (for example, pilot carrier signal in the 15 kHz - 23 kHz region). The noise power in the signal-free region associated with a band of $f1$ kHz - $f2$ kHz band is computed based on the following expression (2):

$$NoisePower = 2 * \int_{f1kHz}^{f2kHz} (No/A_c^2) * f^2 df \qquad (2)$$

Here, $B_T$ is the FM transmission bandwidth (200 KHz), and the RFSNR is expressed as $A_c^2/(2No*B_T)$. From the above expression, the average noise power is inversely proportional to RFSNR. On a dB scale, the noise power is given by the following expression (3):

$$NoisePower\_dB = 10 * \log 10(NoisePower)$$
$$= k - RFSNR\,(dB) \qquad (3)$$

where $k$ is a constant, and the value of $k$ is dependent on the frequency values ($f1$ and $f2$) associated with a frequency band of the signal-free region.

In an example embodiment, the noise power in the 15 KHz - 23 KHz frequency band is computed based on expressions (1) and (2) to obtain:

$$NoisePower = 2 * \int_{15KHz}^{23KHz} (No/A_c^2) * f^2 df$$
$$= (8792/3) * 10^9/(B_T * RFSNR) \qquad (4)$$

On a dB scale, the noise power is given by the following expression (5):

$$NoisePower\_dB = 10 * \log 10(NoisePower)$$
$$= 71.66 - RFSNR\,(dB) \qquad (5)$$

Expressions (3) and (5) indicate a direct linear relationship between RFSNR and the noise power measured. Accordingly, RFSNR of the received signal is directly estimated by measuring the noise power in frequency band associated with the signal free region of the demodulated signal, such as the MPX signal in an FM receiver. In an example embodiment, region associated with 15 KHz - 23 KHz frequency band in an MPX signal corresponds to a signal-free region.

In FIG. 5, the demodulator circuit 508 is coupled to the signal quality estimation circuit 512 and the post-demodulation processing circuit 510, so that the post-demodulation processing circuit 510 receives the digitized demodulated signal from the demodulator circuit 508. Additionally, the demodulator circuit 508 is coupled to the signal quality estimation circuit 512. The signal quality estimation circuit 512 is configured to determine the RFSNR of the radio signal by analyzing the noise power of the signal-free region of the demodulated signal. The signal quality estimation circuit 512 then provides the estimated value of the RFSNR to a control circuit 516 of the post-demodulation processing circuit 510. In an FM receiver, the control circuit 516 is configured to control the demodulated signal based on the estimated value of the RFSNR. For example, in an FM receiver, the control circuit 516 uses the measured RFSNR for performing the SNC. In an embodiment, performing the SNC includes performing mono-stereo blending control. For example, the control circuit 516 is configured to determine whether to blend to mono and/or the extent of blending from stereo to mono. In another embodiment, performing the SNC includes performing a soft mute control. Optionally, the signal quality estimation circuit 512 is implemented by using a microcontroller and appropriate software code or firmware that is loaded into memory storage associated with the microcontroller. In addition, the signal quality estimation circuit 512 is implemented with hardware or any suitable combination of hardware, firmware and/or software, as desired.

FIG. 6 is a block diagram of a signal quality estimation circuit 600, which is an example of the signal quality estimation circuit 512 (FIG. 5). In an embodiment, the signal quality estimation circuit 600 is configured to estimate a signal quality of a received radio signal by exploiting a correlation between the noise power in the demodulated signal and the RFSNR of the received radio signal. In an embodiment, the received radio signal is an FM signal. In an FM receiver, the signal quality estimation circuit 600 is configured to measure the noise power in a signal-free region, for example 15 kHz - 23 kHz frequency band without the pilot carrier signal, in the received MPX spectrum.

In one example embodiment, the signal quality estimation circuit 600 is configured to frequency shift the demodulated signal, so that the demodulated signal associated with the signal free region is at direct current (DC). The demodulated signal associated with the signal-free region includes a signal component and a noise component. The signal quality estimation circuit 600 is configured to reject the signal component and retain the noise component of the demodulated signal. Further, the signal quality estimation circuit 600 is configured to measure the power associated with the noise component of the demodulated signal. The measured power of the noise component includes the noise power associated with the demodulated signal in the signal-free region. As discussed with reference to FIG. 5, the noise power bears a relation with the RFSNR of the received radio signal, and accordingly enables estimation of the RFSNR from the signal quality estimation circuit 600.

In an embodiment, the signal quality estimation circuit 600 is configured to receive a demodulated signal. In an example embodiment (for example in a signal quality estimation circuit associated with an FM receiver), the signal quality estimation circuit 600 receives a demodulated MPX signal 602 from a demodulator circuit, such as the demodulator circuit 508 (explained with reference to FIG. 5). The signal quality estimation circuit 600 is configured to access information associated with the quality of the demodulated signal. In an embodiment, the signal quality estimation circuit 600 is configured to access information associated with an SNR of the demodulated signal, and to estimate a value of RFSNR for the radio signal based on the information. In an embodiment, the signal quality estimation circuit 600 includes a frequency shifter circuit 604, a filter circuit 606, and an RFSNR estimation circuit 608.

The frequency shifter circuit 604 is configured to convert the demodulated signal 602 received as input, so that a signal-free region of the demodulated signal 602 is around DC. If the radio receiver is an FM receiver, the frequency shifter 604 is configured to down-convert the MPX signal, so that the frequency-shifted signal associated with the signal-free region is around DC. In an embodiment, the signal-free region of the demodulated signal 602 includes a signal component, such as a pilot carrier signal and a noise component. In one example, the pilot carrier signal is associated with the 15kHz - 23kHz frequency band of the demodulated signal 602. In an embodiment, the frequency shifter circuit 604 includes a PLL circuit 610 coupled to a mixer 612 for tracking a phase of the signal associated with the signal-free region of the demodulated signal. The mixer 612 is configured to multiply an output of the PLL circuit 610 and the demodulated signal to generate demodulated signal.

The filter circuit 606 is coupled to the frequency shifter circuit 604 and is configured to reject the signal component and retain the noise component of the frequency shifted demodulated signal in the signal-free region. For example, for the signal-free region associated with the pilot carrier signal, the filter circuit 606 is configured to remove the pilot signal at DC and all signals beyond 4 KHz offset from DC, so that only the noise component is retained. In an embodiment, the filter circuit 606 includes one or more half-band filters for removing the signal component and retaining the noise component. For example, in an FM receiver where the output of the demodulator circuit is available at a signal sampling rate of 192 kHz, the filter circuit 606 includes a first half band filter (192 kHz to 96 kHz), a second half band filter (96 kHz to 48 kHz), a third half band filter (48 kHz to 24 kHz) and an finite impulse response (FIR) filter (600 kHz to 3 kHz). In an embodiment, the FIR filter includes a null at DC and a 4 kHz cut-off frequency.

The RFSNR estimation circuit 608 is coupled to the filter circuit 606, and is configured to estimate a value of RFSNR of the radio signal based on the noise component of the frequency shifted signal associated with the signal-free region. In an embodiment, a noise power associated with the noise component of the frequency shifted signal is measured by accumulating square of the samples at the output of the filter circuit 606. The measurement window is programmed to provide balance between noise estimation accuracy and measurement time. As discussed with reference to FIG. 5, the noise component is indicative of the noise power associated with the signal free region of the demodulated signal, and accordingly provides an estimate of the RFSNR. In an embodiment, such as in an FM receiver, the noise power measured by the RFSNR estimation circuit 608 is:

$$NoisePower\_dB = 10 * \log 10(NoisePower)$$
$$= k - RFSNR\,(dB) \qquad (6)$$

In an embodiment, the RFSNR estimation circuit 608 is coupled to a control circuit, such as the control circuit 516 (explained with reference to FIG. 5). An output of the RFSNR estimation circuit 608 is received by the control circuit as indicated by the block 614. In an embodiment, the control circuit is configured to use the estimated value of the RFSNR for processing of the demodulated signal. For example, in an FM receiver, the control circuit is configured to perform SNC based on the estimated value of RFSNR. In an embodiment, performing the SNC includes performing mono-stereo blending control. In another embodiment, performing SNC includes performing soft mute control.

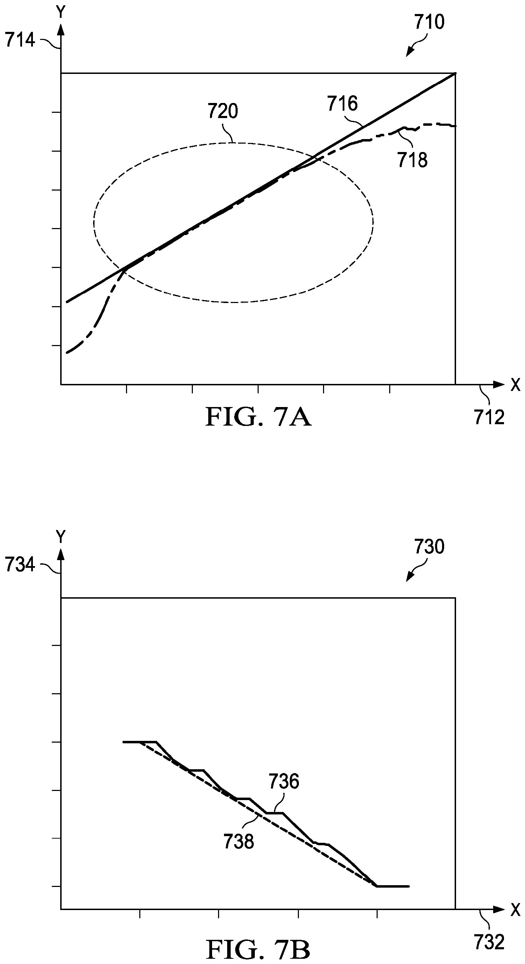

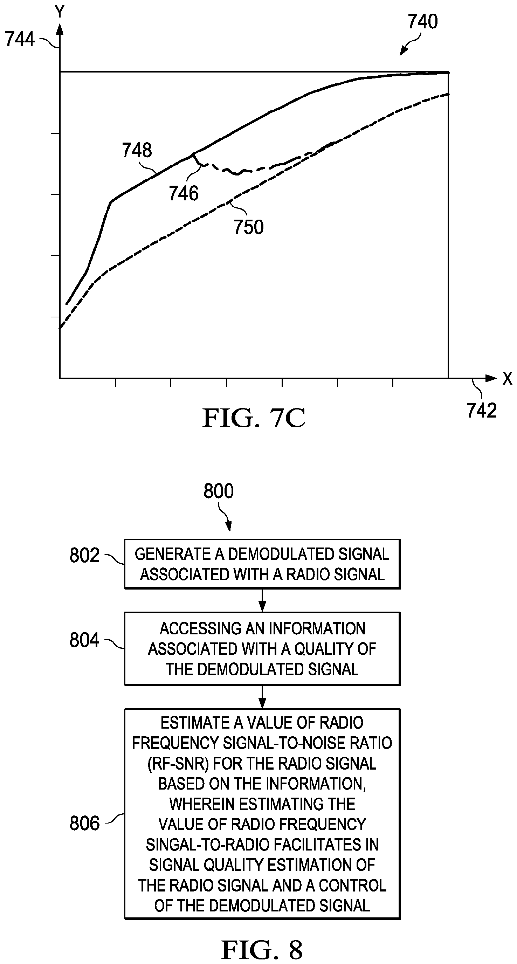

FIGS. 7A, 7B and 7C are graphs of an example performance of the signal quality estimation circuit 600, in an FM receiver that implements SNC with mono-stereo blending control and soft mute control based on RFSNR estimating. FIG. 7A shows a plot 710 between actual RFSNR (plotted along x-axis 712) and estimated RFSNR (plotted along y-axis 714). The plot 710 shows a comparison between the actual RFSNR 716 (measured, for example, based on laboratory simulations) and the estimated RFSNR 718 (estimated by using the signal quality estimation circuit, such as the signal quality estimation circuit 600). In FIG. 7A, a high degree of correlation (depicted by a region enclosed by an enclosure 720) exists between the estimated RFSNR and the actual RFSNR, particularly in a range of interest (for example, between 8 dB to 40 dB).

In FIG. 7B, a plot 730 shows the audio attenuation (along y-axis 732) (indicative of performance of the signal quality estimation circuit 600) in a system on chip (SoC) as a function of the RF input level (along x-axis 734). In this example, the soft mute performance under poor signal conditions (for example, under thermal noise dominated scenario) is evaluated. A plot 736, illustrating performance of the signal quality estimation circuit 600, matches closely with the desired soft mute performance (illustrated by a plot 738). FIG. 7C shows performance of the signal quality estimation circuit for SNC, according to an embodiment. A plot 740 between audio SNR (along y-axis 742) and RFSNR (along x-axis 744) illustrates the SNC mechanism, in which a transition 746 from a mono-only performance (shown by a plot 748) to a full-stereo performance (shown by a plot 750) is achieved by using the signal quality estimation circuit 600 to transition between two plots (748 and 750). FIGS. 7A, 7B and 7C indicate that the signal quality estimation circuit 600 facilitates in improving perceptive audio quality during FM reception.

In FIG. 8, a method 800 includes using an estimated value of RFSNR for estimating quality of a received radio signal and for control of a demodulated signal associated with the radio signal in a radio receiver, such as an FM receiver. In certain embodiments, operations of method 800 are performed by a circuit, such as the signal quality estimation circuit 600 (FIG. 6), which is configured to facilitate in estimating the value of RFSNR associated with the radio signal in the radio receiver.

At block 802, the method includes generating a demodulated signal associated with a radio signal. In an embodiment, the radio signal is received at an input of the radio receiver. In particular, the radio signal is received at a receiver front end circuit of the radio receiver, and demodulated by a demodulator circuit coupled to the receiver front end circuit. An example of the demodulator circuit includes a demodulator circuit 508 (see, e.g. FIG. 5). In an embodiment, the radio signal includes an FM signal, so the FM signal is demodulated by the demodulator circuit to generate an MPX signal.

At block 804, the method includes accessing information associated with a quality of the demodulated signal. In an embodiment, the information includes a noise power value indicating a noise power associated with a signal-free region of the demodulated signal. In an embodiment with MPX signal, the signal-free region of the MPX signal includes a frequency band between 15 kHz-23 kHz, which pertains to pilot carrier signal of the demodulated signal.

In an FM receiver, for accessing the noise power in the signal free region of the MPX signal, the MPX signal is frequency shifted, so that the frequency shifted MPX signal associated with the signal-free region is around DC. The frequency shifted MPX signal includes a noise component and a signal component. In an embodiment, the signal component is rejected and only the noise component is retained. In one example, a filter is applied to reject the DC and all signals above 4 kHz, and the noise power is estimated. In an embodiment, the noise power is estimated by accumulating square of the samples at the output of the filter. In one example, an FIR filter includes a null at DC and a 4 kHz cut-off frequency, which are used for rejecting the DC and all signals above 4 kHz.

At block 806, the method includes estimating a value of an RFSNR for the radio signal based on the information. For example, the value of the RFSNR for the FM signal is estimated based on the noise power value associated with a signal free region of the MPX signal. In an embodiment, the value of the RFSNR is computed based on the following expression:

$$RFSNR(dB) \approx 71.66 - NoisePower(dB) \qquad (7)$$

The estimated value of RFSNR facilitates in signal quality estimation of the received radio signal. For example, the estimated value of RFSNR is useful in an FM receiver for performing SNC mechanism. In certain embodiments, performing the SNC includes performing mono/stereo blending control and/or performing soft mute control. In an embodiment, the estimated value of RFSNR facilitates in the control of the demodulated signal.

Although the method of signal quality estimation and control is explained with reference to a radio receiver, such as an FM based radio receiver, methods and circuits for estimating an RFSNR associated with the radio signal are useful in demodulation circuits of various other communication systems, including those implementing PM (phase modulation), FSK (frequency shift keying), PSK (phase shift keying), and the like. Also, such communication systems allow use of parameters associated with a demodulated signal (for example, noise power in a signal-free region of the demodulated signal) to estimate a pre-demodulation SNR metric associated with the radio signal.

Various embodiments of this technology provide signal quality estimation based on determination of a correlation between the noise power in the demodulated signal associated with a radio signal and the received RFSNR. Various embodiments of this technology provide a circuit for signal quality estimation and control that is configured to estimate a value of RFSNR and subsequently perform control based on the estimated value of RFSNR. The proposed technology overcomes a limitation of the received-signal strength based signal quality estimator under realistic field scenarios and various antenna configurations. The proposed technology may be implemented in various applications, such as soft mute, mono/stereo blending, audio quality indicator, and scenario based current reduction, which are enabled by the proposed circuit.

Modifications are possible in the described embodiments, and other embodiments are possible, within the scope of the claims.

**Claims**

1.  A method of signal quality estimation and control, the method comprising:

    generating a demodulated signal associated with a radio signal;
    accessing an information associated with quality of the demodulated signal;
    wherein the radio signal comprises a frequency modulated FM signal, and the demodulated signal comprises a multiplexed MPX signal; and
    estimating a value of radio frequency signal-to-noise ratio, RF-SNR, for the radio signal based on the information associated with quality of the demodulated signal, said information comprising a noise power value associated with a signal free region of the MPX signal;
    wherein estimating the value of RF-SNR facilitates in signal quality estimation of the radio signal and control of the demodulated signal;
    **characterized in that**
    the value of the RF-SNR is estimated by measuring the noise power value in the signal-free region of the MPX signal based on a formula defined as:

    $$SNR_{RF}(dB) \approx k - NoisePower(dB)$$

    where:

    $SNF_{RF}$ (dB) is the value of the RF-SNR on a decibel (dB) scale,
    NoisePower (dB) is the noise power value on the dB scale, and
    $k$ is a constant, a value of $k$ being dependent on frequency values associated with a frequency band of the signal-free region.

2. The method of claim 1, wherein the frequency band of the signal-free region of the MPX signal is between 15 kilohertz (kHz) and 23 kHz.

3. The method of claim 2, further comprising:

   frequency shifting the MPX signal such that the signal-free region of the MPX signal is at direct current (DC), the frequency shifted signal comprising a signal component and a noise component in the signal-free region; rejecting the signal component and retaining the noise component; and calculating the noise power value associated with the noise component so as to estimate the value of the RF-SNR.

4. The method of claim 1, further comprising performing control of the demodulated signal by performing a stereo noise control (SNC) based on the estimated value of the RF-SNR.

5. The method of claim 4, wherein performing the SNC comprises performing a mono-stereo blending control.

6. The method of claim 4, wherein performing the SNC comprises performing a soft mute control.

7. A circuit for signal quality estimation and control, the circuit comprising:

   a frequency shifter circuit configured to convert a demodulated signal associated with a radio signal such that a signal-free region of the demodulated signal is around direct current (DC), the converted signal comprising a signal component and a noise component;
   a filter circuit coupled with the frequency shifter circuit and configured to reject the signal component and retain the noise component; and
   a radio frequency signal-to-noise ratio (RF-SNR) estimation circuit coupled with the filter circuit and configured to estimate a value of a RF-SNR of the radio signal based on the noise component, wherein estimating the value of RF-SNR facilitates in signal quality estimation of the radio signal and control of the demodulated signal;
   wherein the radio signal comprises a frequency modulated (FM) signal, and the demodulated signal comprises a multiplexed (MPX) signal; and
   **characterized in that**
   the RF-SNR estimation circuit is configured to estimate the value of the RF-SNR by measuring the noise power value in the signal-free region of the MPX signal based on an equation defined as:

$$SNR_{RF}(dB) \approx k - NoisePower(dB)$$

   where:

   $SNF_{RF}$ (dB) is the value of the RF-SNR on a decibel (dB) scale,
   NoisePower (dB) is the noise power value on the dB scale, and
   k is a constant, a value of k being dependent on frequency values associated with a frequency band of the signal-free region.

8. The circuit of claim 7, further comprising: a demodulator circuit coupled with the frequency shifter circuit and configured to generate the demodulated signal associated with the radio signal.

9. The circuit of claim 7, wherein the frequency shifter circuit comprises:

   a phase locked loop (PLL) circuit configured to track a phase of the demodulated signal associated with the signal-free region; and
   a mixer coupled with the PLL circuit and the demodulator circuit, the mixer configured to multiply an output of the PLL circuit and the demodulated signal.

10. The circuit of claim 7, wherein the frequency band of the signal-free region of the demodulated MPX signal is between 15 kilohertz (kHz) and 23 kHz.

11. A radio receiver comprising

a demodulator circuit configured to generate a demodulated signal associated with a radio signal; and
a signal quality estimation circuit coupled with the demodulator circuit, the signal quality estimation circuit comprising the circuit of claim 8; and
a control circuit coupled with the signal quality estimation circuit and configured to control of the demodulated signal based on the estimated value of the RF-SNR.

**12.** The radio receiver of claim 11, wherein the control circuit is coupled with the RF-SNR estimation circuit and is configured to utilize the estimated value of the RF-SNR for facilitating signal quality control in the radio receiver.

**13.** The radio receiver of claim 12, wherein the frequency shifter circuit comprises:

a phase locked loop (PLL) circuit configured to track a phase of the MPX signal; and
a mixer coupled with the PLL circuit and the demodulator circuit, the mixer configured to multiply an output of the PLL circuit and the MPX signal.

**Patentansprüche**

**1.** Verfahren zur Signalqualitätsbewertung und -steuerung, wobei das Verfahren Folgendes umfasst:

Erzeugen eines demodulierten Signals in Verbindung mit einem Funksignal;
Zugreifen auf eine mit der Qualität des demodulierten Signals verbundene Information;
wobei das Funksignal ein frequenzmoduliertes FM-Signal umfasst, und das demodulierte Signal ein gemultiplextes MPX-Signal umfasst; und
Schätzen eines Wertes des Funkfrequenz-Signal-Rausch-Verhältnisses (RF-SNR) für das Funksignal auf der Grundlage der mit der Qualität des demodulierten Signals verbundenen Information,
wobei diese Information einen Rauschleistungswert umfasst, der mit einem signalfreien Bereich des MPX-Signals verbunden ist;
wobei die Schätzung des Wertes des RF-SNR die Signalqualitätsbewertung des Funksignals und die Steuerung des demodulierten Signals erleichtert;
**dadurch gekennzeichnet, dass** der Wert des RF-SNR durch Messen des Rauschleistungswertes im signalfreien Bereich des MPX-Signals auf der Grundlage einer wie folgt definierten Formel geschätzt wird:

$$SNR_{RF}(dB) \approx k - NoisePower(dB).$$

wobei:

$SNR_{RF}(dB)$ ist der Wert des RF-SNR auf einer Dezibel-Skala (dB),
$NoisePower(dB)$ ist der Rauschleistungswert auf der dB-Skala, und
$k$ ist eine Konstante, wobei ein Wert von $k$ von Frequenzwerten abhängt, die mit einem Frequenzband des signalfreien Bereichs verbunden sind.

**2.** Verfahren nach Anspruch 1, wobei das Frequenzband des signalfreien Bereichs des MPX-Signals zwischen 15 Kilohertz (kHz) und 23 kHz liegt.

**3.** Verfahren nach Anspruch 2, das ferner Folgendes umfasst:

Frequenzverschiebung des MPX-Signals, so dass der signalfreie Bereich des MPX-Signals bei Gleichstrom (DC) liegt, wobei das frequenzverschobene Signal eine Signalkomponente und eine Rauschkomponente in dem signalfreien Bereich umfasst;
Zurückweisen der Signalkomponente und Beibehalten der Rauschkomponente; und
Berechnen des mit der Rauschkomponente verbundenen Rauschleistungswertes, um den Wert des RF-SNR zu schätzen.

**4.** Verfahren nach Anspruch 1, das ferner die Durchführung einer Steuerung des demodulierten Signals durch Durchführung einer Stereo-Rauschkontrolle (SNC) auf der Grundlage des geschätzten Wertes des RF-SNR umfasst.

5. Verfahren nach Anspruch 4, wobei die Durchführung der SNC die Durchführung einer Mono-Stereo-Mischungssteuerung umfasst.

6. Verfahren nach Anspruch 4, wobei die Durchführung der SNC die Durchführung einer Soft-Mute-Steuerung umfasst.

7. Schaltung zur Signalqualitätsbewertung und -steuerung, wobei die Schaltung Folgendes umfasst:

eine Frequenzverschiebungsschaltung, die so konfiguriert ist, dass sie ein demoduliertes Signal, das mit einem Funksignal verbunden ist, so umwandelt, dass ein signalfreier Bereich des demodulierten Signals um Gleichstrom (DC) herum liegt, wobei das umgewandelte Signal eine Signalkomponente und eine Rauschkomponente umfasst;

eine Filterschaltung, die mit der Frequenzverschiebungsschaltung gekoppelt und so konfiguriert ist, dass sie die Signalkomponente zurückweist und die Rauschkomponente beibehält; und

eine Schaltung zur Schätzung des Funkfrequenz-Signal-Rausch-Verhältnisses (RF-SNR), die mit der Filterschaltung gekoppelt und so konfiguriert ist, dass sie einen Wert eines RF-SNR des Funksignals auf der Grundlage der Rauschkomponente schätzt,

wobei die Schätzung des Wertes des RF-SNR die Signalqualitätsbewertung des Funksignals und die Steuerung des demodulierten Signals erleichtert;

wobei das Funksignal ein frequenzmoduliertes (FM) Signal umfasst und das demodulierte Signal ein Multiplexsignal (MPX) umfasst; und

**dadurch gekennzeichnet, dass** die RF-SNR-Bewertungsschaltung so konfiguriert ist, dass sie den Wert der RF-SNR durch Messen des Rauschleistungswertes im signalfreien Bereich des MPX-Signals auf der Grundlage einer Gleichung schätzt, die wie folgt definiert ist:

$$SNR_{RF}(dB) \approx k - NoisePower(dB),$$

wobei:

$SNR_{RF}(dB)$ ist der Wert des RF-SNR auf einer Dezibel-Skala (dB),
$NoisePower(dB)$ ist der Rauschleistungswert auf der dB-Skala, und
$k$ ist eine Konstante, wobei ein Wert von $k$ von Frequenzwerten abhängt, die mit einem Frequenzband des signalfreien Bereichs verbunden sind.

8. Schaltung nach Anspruch 7, die ferner Folgendes umfasst:
eine Demodulatorschaltung, die mit der Frequenzverschiebungsschaltung gekoppelt und so konfiguriert ist, dass sie das mit dem Funksignal verbundene demodulierte Signal erzeugt.

9. Schaltung nach Anspruch 7, wobei die Frequenzverschiebungsschaltung Folgendes umfasst:

eine Phasenregelschleifen-(PLL)-Schaltung (Phase Locked Loop), die so konfiguriert ist, dass sie eine Phase des demodulierten Signals, das mit dem signalfreien Bereich verbunden ist, verfolgt; und

einen Mischer, der mit der PLL-Schaltung und der Demodulatorschaltung gekoppelt ist, wobei der Mischer so konfiguriert ist, dass er einen Ausgang der PLL-Schaltung und das demodulierte Signal multipliziert.

10. Schaltung nach Anspruch 7, wobei das Frequenzband des signalfreien Bereichs des demodulierten MPX-Signals zwischen 15 Kilohertz (kHz) und 23 kHz liegt.

11. Funkempfänger, der Folgendes umfasst:

eine Demodulatorschaltung, die so konfiguriert ist, dass sie ein demoduliertes Signal in Verbindung mit einem Funksignal erzeugt; und

eine Signalqualitätsbewertungsschaltung, die mit der Demodulatorschaltung gekoppelt ist, wobei die Signalqualitätsbewertungsschaltung die Schaltung nach Anspruch 8 umfasst; und

eine Steuerschaltung, die mit der Signalqualitätsbewertungsschaltung gekoppelt und so konfiguriert ist, dass sie das demodulierte Signal auf der Grundlage des geschätzten Wertes des RF-SNR steuert.

12. Funkempfänger nach Anspruch 11, wobei die Steuerschaltung mit der RF-SNR-Bewertungsschaltung gekoppelt und so konfiguriert ist, dass sie den geschätzten Wert der RF-SNR zur Erleichterung der Signalqualitätssteuerung im Funkempfänger verwendet.

13. Funkempfänger nach Anspruch 12, wobei die Frequenzverschiebungsschaltung Folgendes umfasst:

eine Phasenregelschleifen-(PLL)-Schaltung (Phase Locked Loop), die so konfiguriert ist, dass sie eine Phase des MPX-Signals verfolgt; und
einen Mischer, der mit der PLL-Schaltung und der Demodulatorschaltung gekoppelt ist, wobei der Mischer so konfiguriert ist, dass er einen Ausgang der PLL-Schaltung und das MPX-Signal multipliziert.

**Revendications**

1. Procédé d'estimation et de commande d'une qualité de signal, le procédé comprenant :

la génération d'un signal démodulé associé à un signal radio ;
l'accès à des informations associées à la qualité du signal démodulé ; dans lequel le signal radio comprend un signal modulé en fréquence FM, et le signal démodulé comprend un signal multiplexé MPX , et
l'estimation d'une valeur de rapport signal radiofréquence sur bruit, RF-SNR, pour le signal radio en fonction des informations associées à la qualité du signal démodulé, lesdites informations comprenant une valeur de puissance de bruit associée à une région sans signal du signal MPX ;
dans lequel l'estimation de la valeur de RF-SNR facilite l'estimation de la qualité du signal radio et la commande du signal démodulé ;
**caractérisé en ce que**
la valeur du RF-SNR est estimée en mesurant la valeur de puissance du bruit dans la région sans signal du signal MPX selon une formule définie par :

$$SNR_{RF} \ (dB) \ \approx \ k \ - \ NoisePower \ (dB)$$

où

$SNF_{RF}$ *(dB)* est la valeur du RF-SNR dans une échelle de décibels (dB),
*NoisePower (dB)* est la valeur de puissance du bruit dans l'échelle dB, et
*k* est une constante, une valeur de *k* dépendant de valeurs de fréquence associées à une bande de fréquences de la région sans signal.

2. Procédé selon la revendication 1, dans lequel la bande de fréquences de la région sans signal du signal MPX est comprise entre 15 kilohertz (kHz) et 23 kHz.

3. Procédé selon la revendication 2, comprenant en outre :

le déplacement en fréquence du signal MPX de telle sorte que la région sans signal du signal MPX soit au niveau du courant continu (CC), le signal déplacé en fréquence comprenant une composante de signal et une composante de bruit dans la région sans signal ;
le rejet de la composante de signal et la conservation de la composante de bruit ; et
le calcul de la valeur de puissance de bruit associée à la composante de bruit afin d'estimer la valeur du RF-SNR.

4. Procédé selon la revendication 1, comprenant en outre la réalisation d'une commande du signal démodulé en réalisant une commande de bruit stéréo (SNC) en fonction de la valeur estimée du RF-SNR.

5. Procédé selon la revendication 4, dans lequel l'exécution du SNC comprend la réalisation d'une commande de mélange mono-stéréo.

6. Procédé selon la revendication 4, dans lequel la réalisation du SNC comprend la réalisation d'une commande d'atténuation sonore.

7. Circuit d'estimation et de commande d'une qualité de signal, le circuit comprenant :

un circuit de déplacement en fréquence configuré pour convertir un signal démodulé associé à un signal radio de telle sorte qu'une région sans signal du signal démodulé se situe autour du niveau de courant continu (CC), le signal converti comprenant une composante de signal et une composante de bruit ;

un circuit de filtre couplé au circuit de déplacement en fréquence et configuré pour modifier la composante de signal et conserver la composante de bruit ; et

un circuit d'estimation de rapport signal radiofréquence sur bruit (RF-SNR) couplé au circuit de filtre et configuré pour estimer une valeur d'un RF-SNR du signal radio en fonction de la composante de bruit, dans lequel l'estimation de la valeur de RF-SNR facilite l'estimation de la qualité du signal radio et la commande du signal démodulé ;

dans lequel le signal radio comprend un signal modulé en fréquence (FM) et le signal démodulé comprend un signal multiplexé (MPX) ; et

**caractérisé en ce que**

le circuit d'estimation de RF-SNR est configuré pour estimer la valeur du RF-SNR en mesurant la valeur de la puissance de bruit dans la région sans signal du signal MPX selon une équation définie comme suit :

$$SNR_{RF}\ (dB)\ \approx\ k\ -\ NoisePower\ (dB)$$

où

$SNF_{RF}$ *(dB)* est la valeur du RF-SNR dans une échelle de décibels (dB),
*NoisePower (dB)* est la valeur de puissance du bruit dans l'échelle dB, et
*k* est une constante, une valeur de *k* dépendant de valeurs de fréquence associées à une bande de fréquences de la région sans signal.

8. Circuit selon la revendication 7, comprenant en outre : un circuit de démodulateur couplé au circuit de déplacement en fréquence et configuré pour générer le signal démodulé associé au signal radio.

9. Circuit selon la revendication 7, dans lequel le circuit de déplacement en fréquence comprend :

un circuit de boucle de verrouillage de phase (PLL) configuré pour suivre une phase du signal démodulé associée à la région sans signal ; et

un mélangeur couplé au circuit PLL et au circuit démodulateur, le mélangeur étant configuré pour multiplier une sortie du circuit PLL et le signal démodulé.

10. Circuit selon la revendication 7, dans lequel la bande de fréquences de la région sans signal du signal MPX démodulé est comprise entre 15 kilohertz (kHz) et 23 kHz.

11. Récepteur radio comprenant

un circuit démodulateur configuré pour générer un signal démodulé associé à un signal radio ; et

un circuit d'estimation de qualité de signal couplé au circuit démodulateur, le circuit d'estimation de qualité de signal comprenant le circuit selon la revendication 8 ; et

un circuit de commande couplé au circuit d'estimation de qualité de signal et configuré pour commander le signal démodulé en fonction de la valeur estimée du RF-SNR.

12. Récepteur radio selon la revendication 11, dans lequel le circuit de commande est couplé au circuit d'estimation de RF-SNR et configuré pour utiliser la valeur estimée du RF-SNR pour faciliter la commande de qualité de signal dans le récepteur radio.

13. Récepteur radio selon la revendication 12, dans lequel le circuit de décalage de fréquence comprend :

un circuit de boucle à verrouillage de phase (PLL) configuré pour suivre une phase du signal MPX ; et

un mélangeur couplé au circuit PLL et au circuit démodulateur, le mélangeur étant configuré pour multiplier une sortie du circuit PLL et le signal MPX.

FIG. 1

FIG. 3

EP 3 000 182 B1

FIG. 2A

FIG. 2B

FIG. 4A

**FIG. 4B**

**FIG. 5**

500

514

RECEIVER FRONT END CIRCUIT 502

504 ADC CIRCUIT

DECIMATION CIRCUIT 506

DEMODULATOR CIRCUIT 508

510 POST-DEMODULATION PROCESSING CIRCUIT

CONTROL CIRCUIT 516

SIGNAL QUALITY ESTIMATION CIRCUIT 512

**FIG. 6**

600

DEMODULATED SIGNAL 602

FREQUENCY SHIFTER CIRCUIT 604

PLL CIRCUIT 610

612

FILTER CIRCUIT 606

RF-SNR ESTIMATION CIRCUIT 608

TO CONTROL CIRCUIT 614

FIG. 7A

FIG. 7B

744 ～

Y

740

748

746

750

X

742

## FIG. 7C

800

802 ～| GENERATE A DEMODULATED SIGNAL ASSOCIATED WITH A RADIO SIGNAL |

804 ～| ACCESSING AN INFORMATION ASSOCIATED WITH A QUALITY OF THE DEMODULATED SIGNAL |

806 ～| ESTIMATE A VALUE OF RADIO FREQUENCY SIGNAL-TO-NOISE RATIO (RF-SNR) FOR THE RADIO SIGNAL BASED ON THE INFORMATION, WHEREIN ESTIMATING THE VALUE OF RADIO FREQUENCY SINGAL-TO-RADIO FACILITATES IN SIGNAL QUALITY ESTIMATION OF THE RADIO SIGNAL AND A CONTROL OF THE DEMODULATED SIGNAL |

## FIG. 8

**EP 3 000 182 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011194699 A1
- US 2010151807 A1
- US 5027402 A
- US 2012257694 A1